# EUROPÄISCHE PATENTSCHRIFT

(11) **EP 0 760 309 B1**
(45) Veröffentlichungstag und Bekanntmachung des Hinweises auf die Patenterteilung: **13.10.1999**
(21) Anmeldenummer: 96113615.7
(22) Anmeldetag: 26.08.1996
(51) Int. Cl.: B60N 3/08, B60N 3/10, A47B 88/04

(54) **Vorrichtung zum Verriegeln und Entriegeln eines Becherbehälters**
Latch and release device for cupholders
Dispositif de verrouillage-déverrouillage d'un porte-gobelet

(30) Priorität: 25.08.1995 CH 242695
(43) Veröffentlichungstag der Anmeldung: 05.03.1997
(73) Patentinhaber: Sarnatech Paulmann & Crone GmbH, 58511 Lüdenscheid (DE)
(72) Erfinder: Eigler, Norbert Johannes, 51709 Marienheide (DE); Rudek, Paul Franz, 58097 Hagen (DE)
(74) Vertreter: Zink-Wild, Markus Peter

(56) Entgegenhaltungen:
- EP-A- 0 341 426
- EP-A- 0 475 244
- EP-A- 0 483 590
- FR-A- 2 549 123
- US-A- 4 635 763

## Beschreibung

Die vorliegende Erfindung betrifft eine Vorrichtung zur Verriegelung und Entriegelung von in einen Raum einfahrbaren oder einführbaren und aus diesem Raum ausfahrbaren oder ausführbaren System zur Aufnahme von Gegenständen.

Die bekannten Trinkbecherhalter, sogenannte Cupholder, haben den grossen Nachteil, dass sie viel Platz beanspruchen und deswegen in Fahrzeugen, wie beispielsweise Autos, Boote, Flugzeuge, äusserlich an einer Armatur angebracht werden.

Dies hat den weiteren Nachteil, dass diese Cupholder nicht verstaut werden können und somit immer sichtbar bleiben und somit nicht im Einklang zum Gesamterscheinungsbild des Fahrzeuginnenraumes stehen.

Andere Cupholder, welche in eine Konsole oder Schalttafel integriert werden können, benötigen ebenfalls viel Platz und können wegen Platzmangel nicht in ergonomischer Reichweite der Fahrzeuginsassen, insbesondere des Fahrzeugführers, installiert werden, weil wichtige Funktionen im Zusammenhang mit der Sicherheit bevorzugt in ergonomischer Reichweite angebracht werden.

In der US-A-4 635 763 wird eine auf Zug hin reagierende Anordnung zum Oeffnen und Schliessen eines Aschenbechersystems beschrieben.

Dieses System umfasst zwei Hebel, welche über einen gemeinsamen Drehbolzen übereinander gelagert und mit Hilfe einer Spiral-Schenkelfeder miteinander verbunden sind.

Diese Feder ist an beide Hebel fixiert. Diese Feder ermöglicht einerseits das System geschlossen zu halten, und andererseits unterstützt sie das Oeffnen des Systems.

Das Oeffnen und Schliessen dieses Systems wird mittels einer Fettbremse gedämpft.

Ein Hebelende ist mit dem Gehäuse fest verbunden, währenddem das Ende des anderen Hebels in einem Schlitz im Gehäuse hin und her geführt wird.

Gemäss einer alternativen Ausführungsform kann zusätzlich ein Verriegelungs- und Entriegelungslmechanismus eingebaut sein.

Bei dieser Ausführungsform ist die Spiral-Schenkelfeder am Lagerungspunkt der beiden Hebel angeordnet.

Es ist ein Ziel der vorliegenden Erfindung, einen Cupholder zur Verfügung zu stellen, welcher wenig Platz beansprucht und in ergonomischer Reichweite der Fahrzeuginsassen in der Armatur, in der Mittelkonsole oder in der Verlängerung der Mittelkonsole verstaut werden kann und sich harmonisch ins Gesamterscheinungsbild des Fahrzeuginnenraumes integriert.

Dieser Cupholder soll mittels herkömmlicher Technik in kostengünstiger und einfacher Herstellungsweise produziert werden können.

Dieser Cupholder soll ausserdem stabil sein und betriebssicher funktionieren.

Ausserdem soll er bei der Herstellung des Fahrzeuges oder auf Wunsch des Fahrzeughalters nachträglich in einen dafür vorgesehenen Bauraum in den oben genannten Stellen eingebaut werden können.

Dieser Cupholder soll insbesondere durch den Fahrzeugführer derart in Betrieb genommen und nach Gebrauch wieder ausser Betrieb gesetzt werden können, dass er in seiner Aufmerksamkeit auf den jeweiligen Verkehr weder gestört noch abgelenkt wird.

Dieser Cupholder soll überall eingebaut werden können und soll ohne Fremdenergie, wie elektrischer Strom, funktionieren.

Eine teilweise manuelle Betätigung wird dabei nicht als Fremdenergie angesehen.

Die erfindungsgemässe Vorrichtung soll nicht auf Cupholder beschränkt sein.

Sie soll auch Einsatz in folgenden Bereichen finden:
- Aschersysteme und Ablagefächer in Fahrzeugen, insbesondere Automobilen,
- Büro, Haushalt, Handwerk, Medizin, Gastronomie, Elektronik.

Alle diese Einsatzbereiche können als System zur Aufnahme von Gegenständen verallgemeinert werden.

Alle obigen Ziele werden mit der erfindungsgemässen Vorrichtung erreicht.

Die erfindungsgemässe Vorrichtung zur Verriegelung und Entriegelung von in einen Raum (21) einfahrbaren oder einführbaren und aus diesem Raum (21) ausfahrbaren oder ausführbaren System (1) zur Aufnahme von Gegenständen, wobei
- an einer Platte (2) wenigstens eine Führung (12) befestigt oder integriert ist, in welcher Führung (12) das genannte System (1) zur Aufnahme von Gegenständen ein- oder ausfahrbar oder ein- oder ausführbar ist,
- auf der Platte (2) ein erster Hebel (3) drehbar gelagert ist,
   ist dadurch gekennzeichnet, dass
- auf der Platte (2) nebst dem genannten ersten Hebel (3) auch ein zweiter Hebel (4) drehbar gelagert ist,
- ein erster Teilbereich (5) des ersten Hebels (3) mit einem ersten Teilbereich (6) des zweiten Hebels (4) kraftschlüssig oder formschlüssig verbunden ist, entweder
- ein zweiter Teilbereich (7) des zweiten Hebels (4) mit einem Stift oder Zapfen (8) versehen ist, welcher in eine Kulisse (9), auch Herzkurve genannt, eingreift,
- diese genannte Kulisse (9) auf der genannten Platte (2) drehbar gelagert ist,
   oder
- ein zweiter Teilbereich (7) des zweiten Hebels (4) eine Kulisse (9), auch Herzkurve genannt, aufweist,
- ein Kulissenhebel (10) auf der genannten Platte (2) drehbar gelagert ist,
- dieser Kulissenhebel (10) mit einem Stift oder Zapfen (8) versehen ist, welcher in die genannte Kulisse (9) eingreift,
   oder
- in einem zweiten Teilbereich (7) des zweiten Hebels (4) eine Kulisse (9), auch Herzkurve genannt, drehbar gelagert ist,
- die genannte Platte (2) mit einem Stift oder Zapfen (8) versehen ist, welcher in die genannte Kulisse (9) eingreift,
   und
- wenigstens einer der beiden genannten Hebel (3,4) mit wenigstens einer solchen an der genannten Platte (2) befestigten Feder (11) verbunden ist, welche das vollständige oder teilweise Ausfahren oder Ausführen des genannten Systems (1) bewirkt,
- das genannte System (1) zur Aufnahme von Gegenständen einen Frontbereich (13), auch Bedienungsbereich genannt, aufweist,
- an diesen Frontbereich (13) zwei Führungselemente (14) befestigt sind,
- ein zweiter Teilbereich (15) des ersten Hebels (3) und ein dritter Teilbereich (16) des zweiten Hebels (4) je derart ausgebildet sind, dass sie beim Einfahren oder Einführen des genannten Systems (1) synchron in die genannten Führungselemente (14) eingreifen und dass sie beim Ausfahren oder Ausführen des genannten Systems (1) synchron aus den genannten Führungselementen (14) ausschwenken, und
- die Kulisse (9) derart geformt ist, dass beim Einfahren oder Einführen das genannte System (1) verriegelt wird und dass beim Ausfahren oder Ausführen das System (1) entriegelt wird.

Bevorzugte Ausführungsformen der erfindungsgemässen Vorrichtung sind in den abhängigen Ansprüchen definiert.

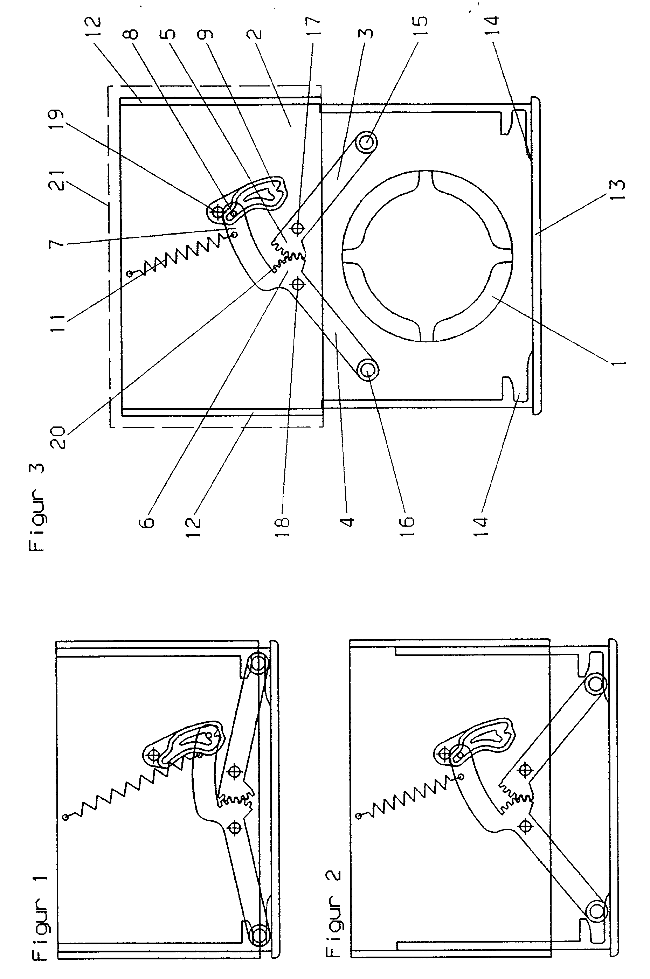

Im folgenden Teil werden unter Bezugnahme auf die Figuren 1 bis 3 mögliche Ausführungsformen der erfindungsgemässen Vorrichtung beschrieben.
Figur 1 zeigt in der Draufsicht rein schematisch eine erfindungsgemässe Vorrichtung in vollständig verriegelter Ausgangsposition.
Figur 2 zeigt in der Draufsicht rein schematisch eine erfindungsgemässe Vorrichtung in teilweise geöffneter Form, wobei der Verriegelungsmechanismus bereits vollständig entriegelt ist.
Figur 3 zeigt in der Draufsicht rein schematisch eine erfindungsgemässe Vorrichtung, verglichen mit Figur 2, in weiter ausgefahrener, respektive ausgeführten Position.

Dabei werden Ausführungsformen, wie sie in den abhängigen Ansprüchen definiert sind, normalerweise nicht wiederholt.

Die erfindungsgemässe Vorrichtung kann unter Berücksichtigung des wirtschaftlichen Aspektes und der Machbarkeit aus jedem geeigneten Material gemäss vorgegebenen Anforderungen, wie zum Beispiel Beständigkeit im Gebrauchstemperaturbereich, insbesondere von - 40°C bis + 90°C, hergestellt sein.

Geeignete Materialien sind beispielsweise Kunststoffe, wie modifizierte Polypropylene, Acrylnitril-Butadien-Styrol-Polymere (ABS), oder Metalle und Legierungen davon, wie etwa Aluminium, Blech.

Wenn die erfindungsgemässe Vorrichtung, worin das System 1 als Cupholder oder als Ascher ausgebildet ist, in einem Automobil verwendet wird, hat die Platte 2 folgende Dimensionen: 115 mm x 75 mm x 2,5 mm.

Der erste Hebel 3 hat Dimensionen von 55 mm x 6 mm x 2,5 mm.

Der erste Hebel 3 dreht sich um den als Zapfen ausgebildeten Drehpunkt 17.

Der erste Teilbereich 5 des ersten Hebels 3 weist eine Verzahnung auf.

Der zweite Teilbereich 15 des ersten Hebels 3 ist ebenfalls als Zapfen ausgebildet.

Der zweite Hebel 4 hat Dimensionen von 85 mm x 6 mm bis 20 mm x 2,5 mm bis 5 mm.

Der zweite Hebel 4 dreht sich um den als Zapfen ausgebildeten Drehpunkt 18.

Der erste Teilbereich 6 des zweiten Hebels 4 weist eine Verzahnung auf.

Diese Verzahnung und die am ersten Hebel 3 angebrachte Verzahnung bilden die formschlüssige Verbindung 20.

Der dritte Teilbereich 16 des zweiten Hebels 4 ist ebenfalls als Zapfen ausgebildet.

Der zweite Teilbereich 7 des zweiten Hebels 4 ist mit einem Stift 8 versehen, welcher in die Kulisse 9 eingreift.

Die Kulisse 9 dreht sich um den als Zapfen ausgebildeten Drehpunkt 19.

Der zweite Hebel 4 ist mit einer an der Platte 2 befestigten Zugfeder 11 verbunden.

Beim als Cupholder oder als Ascher ausgebildeten System 1 hat der Frontbereich 13 die Form einer Abdeckkappe mit den Dimensionen 112 mm x 25 mm x 3 mm.

Auf der Innenwand dieser Abdeckkappe sind zwei Führungselemente 14 fest integriert.

Diese beiden Führungselemente 14 sind als schrägförmige Einschnitte ausgebildet.

Auf der Innenwand dieser Abdeckkappe sind auch zwei als Führungsschienen ausgebildete Führungen 12 fest integriert.

Dabei sind diese beiden Führungsschienen auch in die Platte 2 integriert.

Ein in ein Fahrzeug eingebauter erfindungsgemässer Cupholder oder Ascher wird wie folgt in Betrieb genommen:

Durch push-Betrieb, beziehungsweise Eindrücken der Abdeckkappe 13 mit den daran fixierten Teilen in Richtung Platte 2, wird die erfindungsgemässe Vorrichtung in der Kulisse 9 entriegelt, und durch die Kraft der Zugfeder 11 wird die Abdeckkappe 13 mit den daran fixierten Teilen in entgegengesetzter Richtung bewegt.

Durch die Kraft der Zugfeder 11 werden die Hebel 3,4 dank der formschlüssigen Verbindung 20 synchron und zwangsläufig aus den beiden schrägförmigen Einschnitten 14 bewegt.

Die Endstellung dieser Bewegung wird durch die Länge der jeweiligen Bahn in der Kulisse 9 bestimmt.

Damit ist die erfindungsgemässe Vorrichtung vollständig entriegelt. Somit kann das System 1 in der Form eines Cupholders oder Aschers manuell aus dem Raum 21 in die gewünschte Endposition gebracht werden und ist dann betriebsbereit.

Bei Nichtbedarf wird die erfindungsgemässe Vorrichtung wie folgt in die Ausgangsposition zurückgeführt:

Die Abdeckkappe 13 mit den daran fixierten Teilen wird manuell in Richtung Platte 2 geschoben oder gedrückt.

Dabei trifft die Innenseite der Abdeckkappe 13 auf die sich immer noch in ihrer Entstellung befindlichen Hebel 3,4 auf.

Durch weiteres Drücken der Abdeckkappe 13 bis zur Endstellung, welche durch die Länge der jeweiligen Bahn in der Kulisse 9 bestimmt wird, wird die vollständige Verriegelung der erfindungsgemässen Vorrichtung erreicht.

Dabei greifen die Hebel 3,4 dank der formschlüssigen Verbindung 20 synchron und zwangsläufig in die beiden schrägförmigen Einschnitte 14 ein.

Gleichzeitig wird durch diese Bewegung der Hebel 3,4 die Zugfeder 11 vorgespannt.

Ebenso wird das System 1 in der Form eines Cupholders oder Aschers in den Raum 21 geschoben.

Beim Verriegeln und beim Entriegeln kann die Abdeckkappe 13 auf ihrer gesamten Länge und Breite geschoben oder gedrückt werden, ohne dass die Funktion des sich synchron bewegenden Verriegelungsmechanismuses beeinträchtigt würde.

Das System 1 kann bei entsprechender Dimensionierung der erfindungsgemässen Vorrichtung auch als Karteifach, als Rahmen, insbesondere für Hängemappen oder Hängetaschen, als Schublade, insbesondere zur Aufnahme von Gegenständen aus den Bereichen Medizin, Handwerk, Elektronik, Gastronomie und Haushalt, oder als Ablagefach, vorzugsweise in Fahrzeugen, insbesondere Automobilen, ausgebildet sein.

In der vorliegenden Erfindung werden die folgenden Bezugszeichen verwendet:
- 1: System zur Aufnahme von Gegenständen
- 2: Platte
- 3: erster Hebel
- 4: zweiter Hebel
- 5: erster Teilbereich des ersten Hebels 3
- 6: erster Teilbereich des zweiten Hebels 4
- 7: zweiter Teilbereich des zweiten Hebels 4
- 8: Stift oder Zapfen
- 9: Kulisse
- 10: Kulissenhebel
- 11: Feder
- 12: Führung
- 13: Frontbereich
- 14: Führungselemente
- 15: zweiter Teilbereich des ersten Hebels 3
- 16: dritter Teilbereich des zweiten Hebels 4
- 17, 18, 19: Drehpunkte
- 20: kraftschlüssige oder formschlüssige Verbindung
- 21: Raum.

## Patentansprüche

1. Vorrichtung zur Verriegelung und Entriegelung von in einen Raum (21) einfahrbaren oder einführbaren und aus diesem Raum (21) ausfahrbaren oder ausführbaren System (1) zur Aufnahme von Gegenständen, wobei
- an einer Platte (2) wenigstens eine Führung (12) befestigt oder integriert ist, in welcher Führung (12) das genannte System (1) zur Aufnahme von Gegenständen ein- oder ausfahrbar oder ein- oder ausführbar ist,
- auf der Platte (2) ein erster Hebel (3) drehbar gelagert ist,
dadurch gekennzeichnet, dass
- auf der Platte (2) nebst dem genannten ersten Hebel (3) auch ein zweiter Hebel (4) drehbar gelagert ist,
- ein erster Teilbereich (5) des ersten Hebels (3) mit einem ersten Teilbereich (6) des zweiten Hebels (4) kraftschlüssig oder formschlüssig verbunden ist,
entweder
- ein zweiter Teilbereich (7) des zweiten Hebels (4) mit einem Stift oder Zapfen (8) versehen ist, welcher in eine Kulisse (9), auch Herzkurve genannt, eingreift,
- diese genannte Kulisse (9) auf der genannten Platte (2) drehbar gelagert ist,
oder
- ein zweiter Teilbereich (7) des zweiten Hebels (4) eine Kulisse (9), auch Herzkurve genannt, aufweist,
- ein Kulissenhebel (10) auf der genannten Platte (2) drehbar gelagert ist,
- dieser Kulissenhebel (10) mit einem Stift oder Zapfen (8) versehen ist, welcher in die genannte Kulisse (9) eingreift,
oder
- in einem zweiten Teilbereich (7) des zweiten Hebels (4) eine Kulisse (9), auch Herzkurve genannt, drehbar gelagert ist,
- die genannte Platte (2) mit einem Stift oder Zapfen (8) versehen ist, welcher in die genannte Kulisse (9) eingreift,
und
- wenigstens einer der beiden genannten Hebel (3,4) mit wenigstens einer solchen an der genannten Platte (2) befestigten Feder (11) verbunden ist, welche das vollständige oder teilweise Ausfahren oder Ausführen des genannten Systems (1) bewirkt,
- das genannte System (1) zur Aufnahme von Gegenständen einen Frontbereich (13), auch Bedienungsbereich genannt, aufweist,
- an diesen Frontbereich (13) zwei Führungselemente (14) befestigt sind,
- ein zweiter Teilbereich (15) des ersten Hebels (3) und ein dritter Teilbereich (16) des zweiten Hebels (4) je derart ausgebildet sind, dass sie beim Einfahren oder Einführen des genannten Systems (1) synchron in die genannten Führungselemente (14) eingreifen und dass sie beim Ausfahren oder Ausführen des genannten Systems (1) synchron aus den genannten Führungselementen (14) ausschwenken, und
- die Kulisse (9) derart geformt ist, dass beim Einfahren oder Einführen das genannte System (1) verriegelt wird und dass beim Ausfahren oder Ausführen das System (1) entriegelt wird.

2. Vorrichtung nach Anspruch 1, dadurch gekennzeichnet, dass die Hebel (3,4) eine gerade, gekrümmte, gewölbte oder stufenförmige Form haben, einschliesslich beliebige Kombinationen davon.

3. Vorrichtung nach einem der Ansprüche 1 bis 2, dadurch gekennzeichnet, dass die genannten drehbaren Lagerungen mittels Bolzen, Zapfen oder Wellen erfolgen.

4. Vorrichtung nach einem der Ansprüche 1 bis 3, dadurch gekennzeichnet, dass die kraftschlüssige oder formschlüssige Verbindung (20) der beiden Hebel (3,4) mittels Verzahnung, Reibung, Stift/Langloch-Verbindung, Riemen, wie Zahnriemen oder Keilriemen, erfolgt.

5. Vorrichtung nach einem der Ansprüche 1 bis 4, dadurch gekennzeichnet, dass die Federn (11) Zug-, Druck- oder Schenkelfedern sind.

6. Vorrichtung nach einem der Ansprüche 1 bis 5, dadurch gekennzeichnet, dass eine oder zwei Führung(en) (12) vorhanden ist (sind), insbesondere in der Form von Führungsschienen.

7. Vorrichtung nach einem der Ansprüche 1 bis 6, dadurch gekennzeichnet, dass der Frontbereich (13) als Blende oder Abdeckkappe ausgebildet ist.

8. Vorrichtung nach einem der Ansprüche 1 bis 7, dadurch gekennzeichnet, dass die Führungselemente (14) entweder einen schrägförmigen oder trichterförmigen Einschnitt aufweisen oder als Bolzen, Zapfen oder Stift ausgebildet sind.

9. Vorrichtung nach einem der Ansprüche 1 bis 8, dadurch gekennzeichnet, dass der zweite Teilbereich (15) des ersten Hebels (3) und der dritte Teilbereich (16) des zweiten Hebels (4) je entweder als Bolzen, Zapfen oder Stift ausgebildet sind, oder einen Einschnitt aufweisen.

10. Vorrichtung nach einem der Ansprüche 1 bis 9, dadurch gekennzeichnet, dass das System (1) zur Aufnahme von Gegenständen
- eine Vorrichtung zur Aufnahme/Halterung von Behältnissen, insbesondere Flaschen, Dosen, Becher, Gläser,
- ein Aschenbecher,
- ein Karteifach,
- ein Rahmen, insbesondere für Hängemappen oder Hängetaschen,
- eine Schublade, insbesondere zur Aufnahme von Gegenständen aus den Bereichen Medizin, Handwerk, Elektronik, Gastronomie und Haushalt,
- ein Ablagefach, vorzugsweise in Fahrzeugen, insbesondere Automobilen,
ist.

## Claims

1. Device for a locking and unlocking of a system (1) for the receipt of articles which is slideable in or insertable into a chamber (21) and is slideable out or extractable out of this chamber (21), whereby
- at least one guide (12) is mounted or integrated on a plate (2), in which guide (12) said system (1) for the receipt of articles is slideable in or slideable out or is insertable or extractable,
- a first lever (3) is supported for rotation on the plate (2),
characterized in that
- besides the mentioned first lever (3) also a second lever (4) is supported for rotation on the plate (2),
- a first partial area (5) of the first lever (3) is connected to a first partial area (6) of the second lever (4) in a force locked or a form locked manner,
either
- a second partial area (7) of the second lever (4) is provided with a pin or peg (8) which engages into a coulisse (9), also termed cardiac curve,
- this said coulisse (9) is supported for rotation on said plate (2),
or
- a second partial area (7) of the second lever (4) includes a coulisse (9), also termed cardiac curve,
- a coulisse lever (10) is supported for rotation on said plate (2),
- this coulisse lever (10) is provided with a pin or peg (8) which engages into said coulisse (9),
or
- a coulisse (9), also termed cardiac curve, is supported for rotation in a second partial area (7) of the second lever (4),
- the said plate (2) is provided with a pin or peg (8) which engages into the said coulisse (9),
and
- at least one of the two mentioned levers (3,4) is attached to at least one such kind spring (11) mounted to the said plate (2), which causes the complete or partial sliding out or extracting of the said system (1),
- the said system (1) comprises a front area (13), also termed operating area, for the receipt of articles,
- two guiding elements (14) are mounted at this front area (13),
- both a second partial area (15) of the first lever (3) and a third partial area (16) of the second lever (4) are structured in such a manner, that they during the sliding in or inserting of said system (1) engage in synchronism into said guiding elements (14), and that they during the sliding out or extracting of the said system (1) pivot in synchronism out of the said guiding elements (14), and
- the coulisse (9) is shaped in such a manner that upon the sliding in or inserting the system (1) is locked and that upon the sliding out or extracting the system (1) is unlocked.

2. Device according to claim 1, characterized in that the levers (3,4) have a rectilinear, curvilinear, domed or step-like shape, inclusive arbitrary combinations thereof.

3. Device according to one of the claims 1 to 2, characterized in that the said rotatable supports are effected by means of bolts, pegs or shafts.

4. Device according to one of the claims 1 to 3, characterized in that the force locked or form locked connection (20) of the two levers (3,4) is effected by toothing, friction, pin/elongate opening - connection, belts, such as toothed belts or cone belts.

5. Device according one of the claims 1 to 4, characterized in that the springs (11) are tension, compression or leg springs.

6. Device according to one of the claims 1 to 5, characterized in that one or two guide(s) (12) is/are present, specifically in the form of guiding rails.

7. Device according to one of the claims 1 to 6, characterized in that the front area (13) is designed as cover plate or covering lid.

8. Device according to one of the claims 1 to 7, characterized in that the guiding elements (14) include either a oblique shaped or funnel shaped recess or are structured as bolt, peg or pin.

9. Device according to one of the claims 1 to 8 characterized in that the second partial area (15) of the first lever (3) and the third partial area (16) of the second lever (4) are either structured as bolt, peg or pin or include a recess.

10. Device according to one of the claims 1 to 9, characterized in that the system (1) for the receipt of articles is
- a device for the receipt/support of receptacles, specifically bottles, cans, cups, glasses,
- an ash tray,
- a card-index compartment,
- a frame, specifically for hanging folders or hanging bags,
- a drawer, specifically for the receipt of articles of the fields medicine, handiwork, electronics, gastronomy and household,
- a storage compartment, preferably in vehicles, specifically automobiles.

## Revendications

1. Dispositif de verrouillage et déverrouillage d'un système (1) pouvant être roulé ou introduit dans un espace (21) ou pouvant être roulé ou extrait hors de cet espace (21) afin de recevoir des objets,
- au moins un guide (12) étant fixé ou intégré à une plaque (2), ledit système (1) pouvant être roulé ou introduit dans ce guide (12) ou roulé ou extrait hors de celui-ci afin de recevoir des objets,
- un premier levier (3) étant fixé de manière permettant la rotation sur la plaque (2),
caractérisé en ce que
- un deuxième levier (4) est également fixé de manière permettant la rotation en plus du premier levier (3) sur 1 plaque (2),
- une première zone partielle (5) du premier levier (3) est reliée par force ou mécaniquement à une première zone partielle (6) du deuxième levier (4),
soit
- une deuxième zone partielle (7) du deuxième levier (4) est pourvue d'une broche ou d'un tenon (8), qui s'engage dans une coulisse (9) également appelée cardioïde,
- ladite coulisse (9) est fixée de manière permettant la rotation sur ladite plaque (2),
soit
- une deuxième zone partielle (7) du deuxième levier (4) présente une coulisse (9) également appelée cardioïde,
- un levier de coulisse (10) est fixé de manière permettant la rotation sur ladite plaque (2),
- ce levier de coulisse (10) est pourvu d'une broche ou d'un tenon (8), qui s'engage dans ladite coulisse (9),
soit
- une coulisse (9), également appelée cardioïde, est fixée de manière permettant la rotation dans une deuxième zone partielle (7) du deuxième levier (4),
- ladite plaque (2) est pourvue d'une broche ou d'un tenon (8), qui s'engage dans ladite coulisse (9),
et
- au moins un des deux dits leviers (3, 4) est relié à au moins un tel ressort (11) fixé sur ladite plaque (2), que celui-ci provoque complètement ou partiellement la sortie par roulement ou l'extraction dudit système (1),
- ledit système (1) de réception d'objets présente une zone frontale (13), également appelée zone de manipulation,
- deux éléments de guidage (14) sont fixés à cette zone frontale (13),
- une deuxième zone partielle (15) du premier levier (3) et une troisième zone partielle (16) du deuxième levier (4) sont construites de telle façon que, lors de l'introduction par roulement ou de l'insertion dudit système (1), elles pénètrent en synchronisme dans lesdits éléments de guidage (14) et que, lors de la sortie par roulement ou de l'extraction dudit système (1), elles basculent en synchronisme en dehors desdits éléments de guidage (14), et
- la coulisse (9) a une forme telle que, lors de l'introduction par roulement ou de l'insertion, ledit système (1) est verrouillé et que, lors de la sortie par roulement ou de l'extraction, ledit système (1) est déverrouillé.

2. Dispositif suivant la revendication 1, caractérisé en ce que les leviers (3, 4) ont une forme droite, recourbée ou étagée, y compris des combinaisons quelconques de celles-ci.

3. Dispositif suivant l'une des revendications 1 à 2, caractérisé en ce que lesdits appuis permettant la rotation sont réalisés à l'aide de boulons, tenons ou arbres.

4. Dispositif suivant l'une des revendications 1 à 3, caractérisé en ce que la liaison par force ou mécanique (20) des deux leviers (3, 4) est réalisée par denture, frottement, broche et trou oblong, courroie telle que courroie dentée ou courroie trapézoïdale.

5. Dispositif suivant l'une des revendications 1 à 4, caractérisé en ce que les ressorts (11) sont des ressorts de traction, des ressorts de compression ou des ressorts à branches.

6. Dispositif suivant l'une des revendications 1 à 5, caractérisé en ce qu'un ou deux guide(s) (12) est (sont) présent(s), en particulier sous la forme de rails de guidage.

7. Dispositif suivant l'une des revendications 1 à 6, caractérisé en ce que la zone frontale (13) est construite comme capot ou couvercle.

8. Dispositif suivant l'une des revendications 1 à 7, caractérisé en ce que les éléments de guidage (14) présentent une découpe oblique ou en forme d'entonnoir ou sont construits comme boulons, tenons ou broches.

9. Dispositif suivant l'une des revendications 1 à 8, caractérisé en ce que la deuxième zone partielle (15) du premier levier (3) et la troisième zone partielle (16) du deuxième levier (4), soit sont construits comme boulons, tenons ou broches, soit présentent une découpe.

10. Dispositif suivant l'une des revendications 1 à 9, caractérisé en ce que le système (1) destiné à recevoir des objets est
- un dispositif de réception/maintien de récipients, en particulier de bouteilles, boîtes, gobelets, verres,
- un cendrier,
- un tiroir à fichiers,
- un cadre, en particulier pour dossiers suspendus ou sacs suspendus,
- un tiroir, en particulier pour la réception d'objets des domaines de la médecine, de l'artisanat, de l'électronique, de la gastronomie et du ménage,
- un tiroir de rangement, de préférence dans des véhicules, en particulier des automobiles.
